# EUROPEAN PATENT APPLICATION

(11) **EP 1 265 178 A1**
(43) Date of publication of application: **11.12.2002**
(21) Application number: 02253353.3
(22) Date of filing: 14.05.2002
(51) Int. Cl.: G06F 17/60

(54) **Systems and methods for an auto security monitor that makes markets**

(30) Priority: 14.05.2001 US 290710 P
(71) Applicant: eSPEED, Inc., New York, NY 10171 (US)
(72) Inventor: Crazioso, Timothy,, deceased (US); Khalfan, Asif,, New York, 11803 (US); Ilkanayev, Daniel, deceased (US); Jian, Hweider,, deceased (US); Marber Philip,, 29 E, New York 10016, (US)
(74) Representative: Jones, David Colin

(57) **Abstract**

Systems and methods that can fully automate the market making process while still retaining the ability to integrate manually entered orders are provided. A market mover application is also provided that can reduce a market maker's exposure to market making activities by generating BEST bid and ask quotations. Additionally, the quantity of these generated BEST quotations are minimized, while the price of these generate BEST quotations are maximized with respect to the amount of change allowed by the exchange or desired by the market maker.

## Description

### Background of the Invention

The present invention relates to systems and methods that can fully automate the market making process while still retaining the ability to integrate manually entered orders. More particularly, the present invention can include automated, semi-automated, or manual order inception, controlling of market maker quotes, order placement, order execution, risk handling, position balancing, or any other functionality associated with the market making process.

A market maker is an entity that maintains an inventory of stock in a specific security and, in doing so, can receive and execute orders for that specific security. The largest exchange in the world that utilizes market makers to make markets is the National Association of Securities Dealers' (NASD) Automated Quotation system (NASDAQ) exchange. Not all exchanges, however, implement market makers to create an exchange market. The New York Stock Exchange (NYSE), for example, employs specialists to create and manage an auction-based exchange.

Public competition between market makers is utilized to operate the NASDAQ exchange and form the fundamentals of a market. Particularly, market makers post their BEST two-sided quotations (e.g, a BEST bid which is the market maker's largest priced offer to buy and a BEST ask which is the market maker's smallest priced offer to sell) for a stock or security to the exchange. Each bid and ask quotation includes a specific price at which a specific quantity of stock or security will be bought (e.g, bid) or sold (e.g, ask).

In this manner, every market maker will preferably post to the exchange their BEST bid and ask quotes. In the NASDAQ, if a market maker's posted BEST bid or ask quotation or quote is the BEST posted quote for a security, then that market maker's quotation or quote is displayed as the NASDAQ public quote for that security. In other words, the BEST NASDAQ public ask quote is the lowest priced ask quote posted and the BEST NASDAQ bid is the highest priced ask quote posted to the NASDAQ from all the market makers. Securities in the NASDAQ exchange trade at these public quotes. Occasionally, a market maker's posted BEST bid and BEST ask quote is referred to as the market maker's inside bid and inside ask quote. In order to facilitate any functionality in the NASDAQ that requires information from multiple market makers, market makers are electronically networked together. Such networks of market makers are known as electronic communications networks (hereinafter "ECNs").

Market makers commonly integrate utility tools that are designed to facilitate specific aspects of the market making process. For example, when an order is executed at a particular public quote, the market maker who posted the quote is responsible for filling the order. As a result, some market makers may integrate a real-time order execution system from an order execution utility tool so that orders may be appropriately executed in the NASDAQ exchange. An example of one such order execution utility tool is the BRASS utility tool. Furthermore, market makers occasionally need to communicate information with each other. Such situations may arise, for example, when a market maker realizes an error has occurred in posting a price, two market makers execute an order between each other, or a regulation has not been followed by a market maker. As a solution to these situations, the SelectNet message application utilizes ECNs as communications backbones so that messages may be transferred between market makers.

A market maker can handle customer orders as either a broker or a dealer/principal. As a broker, a market maker may arrange the trade between a buyer and seller, charging a commission for the service. As a dealer/principal, a market maker may buy and sell a security from its inventory to a customer or act as a market maker in an exchange by making markets (e.g., executing orders) with its inventory. The market maker may charge a customer in the form of either a mark-up or mark-down to the executed price. Depending on the customer's position in the security, such a mark-up or mark-down would be either added to or subtracted from the price of each executed share (e.g, the subtraction of $1/16 per executed share). For example, if a customer sells a share at $16 1/16 and the mark-down is $1/16, the customer will receive $16 while the market maker will receive $1/16.

Exchanges that utilize market makers often employ strict regulations in order to control market making activities, restricting when and how market makers may communicate with and affect an exchange's automated quotation system. In the NASDAQ, such regulations are known as the Security Exchange Commission's (SEC's) "New Order Handling Rules". Under these regulations, a market maker should preferably make an effort to obtain the BEST posted price to the NASDAQ.

More particularly, the SEC's "New Order Handling Rules" state that any automated update of quotations by a NASD market maker should meet the following standards:
1) The update is in response to an execution in the security by that firm; or
2) The update requires a physical entry (such as a manual entry to a market maker's internal system which then automatically forwards the update to the NASDAQ); or
3) The update reflects the receipt, execution, or cancellation of a customer limit order; or
4) An electronic communications network as defined in SEC Rule 11Acl-1(a)(8) maintains a two-sided quotation in NASDAQ for the purpose of meeting NASDAQ design requirements.
The above restrictions were implemented, in part, to limit auto-quotation practices that track changes in NASDAQ inside quotations and react to these tracked changes by generating favorable quotes for the market maker. Such quotes could increase market maker revenue while financially hurting the customer. For example, without such regulations the market maker posting a BEST public bid could move their bid closer to the next BEST inside bid. As a result, a higher commission or mark-up/mark-down may be obtained without losing the trade (e.g, still having the BEST public quote).

Currently, a large amount of manpower is needed to make markets in a single security. This is because manual interactions have been typically needed at almost every phase of the market making process. For example, a conventional trader may have the responsibility of manually moving the market maker's inside quotes when appropriate. The number of securities that a market maker can make markets in is therefore limited, thus limiting the market maker's visibility to customers who will only submit or execute an order for a security with a market maker of that security.

Furthermore, current systems are unable to monitor and react to the performance of manual decisions. For example, a trader with a history of poor performance may make markets in a security in the same manner as a trader with a history of good performance. Thus, the risk of having poor trading decisions increases. If revenue is based even partly on such poor trading decisions, revenue will decrease.

It would therefore be desirable to provide a security monitor for market makers which can monitor multiple securities and automate, when necessary, the market making process.

### Summary of the Invention

It is an object of the present invention to provide a security monitor for market makers which can monitor multiple securities and automate, when necessary, the market making process. The auto-security monitor of the present invention may advantageously provide the functionality of automated, manual, or semi-automated monitoring and execution of tasks such as order inception, order execution, position balancing, and market moving.

One advantage of the present invention is the utilization of a market mover application that is capable of controlling the inside quotes of a market maker while adhering to the pertinent regulations, such as the SEC's "New Order Handling Rules" for the NASDAQ. The SEC's "New Order Handling Rules" is incorporated herein by reference in its entirety. The functionality of the market mover function may be pre-defined, manually changed, automatically changed when pre-defined market conditions occur, or react autonomously to market conditions. For these reasons, the market mover application may obtain a high level of intelligence and configurability and achieve real-time operation. "Real time" should be understood to suggest immediacy, subject to normal electronic processing delay and interruptions.

In a preferred embodiment, the market mover application moves the market maker's BEST quotes when desired or needed. The market mover application may move a market maker's BEST quote by the desired price change after executing an order at desired size. These points will be explained in more detail below.

Some instances may arise in which a market maker has to make the market in order to fulfill the obligation of being "willing to buy and sell [a] security [from] its own [inventory] on a continuous basis" (e.g, SEC "New Order Handling Rules" IN 4613(a)(1)). These instances may be, for example, if a market maker has no customer bid orders, the market maker has to post a BEST bid to the NASDAQ and, if appropriate, execute that BEST bid. In such instances, after executing an order at the minimum allowed size, the market mover application may preferably move a market maker's BEST quote by the maximum allowed price change (e.g., the maximum increase in price for an ask quote and the minimum decrease in price for a bid quote), thus allowing the market maker to make the market while reducing the market maker's expose to further market making activities. In doing so, the market mover application can minimize the frequency in which a market maker has to make a market by moving the market maker's quote the maximum allowed change from the market price. Also, this functionality may lower the costs and risks associated with making a market because initially the smallest size order is executed.

Preferably, no manual interaction is required to change or update the market maker's BEST quote when a market maker has to make the market in a security. In minimizing the risk, cost, and manpower associated with making a market and minimizing the frequency at which a market maker is rejoined to make a market, a market maker can make markets in a large number of securities, such as 3000 securities, when compared conventional market makers which typically only make markets in 30 securities or less. As a result, a market maker may increase market and customer visibility by attracting customers that will only give security orders to a market maker of that particular security. Additionally, the market mover application can either separately or concurrently make markets in multiple exchanges.

If needed or desired, manual intervention may occur at preferably any time, thus placing the market making process in either a semi-automated or manual configuration. This allows for special or desired orders to be executed manually and integrated into the market mover application. In one embodiment of a semi-automated process, orders are analyzed based on specific criteria. Depending on the results of this analysis, the orders may then be either manually verified, manually executed, or automatically executed. For example, an order originating from a customer with bad credit may be flagged and subsequently forwarded to a manual verification stage while an order based on good credit may be processed automatically.

The present invention also preferably provides the capability of monitoring and assigning access rights to users of the system. These users can be assigned a variety of different access rights such as those associated with market makers, administrators, and traders. In doing so, administrators may have the access rights to monitor trader activity and restrict such activity according to performance, thus limiting the amount of potential adverse decisions for the market maker.

The present invention also includes a method for monitoring and making markets in securities for an exchange that reduces a market maker's exposure to market making activities. More particularly, the method monitors the activity of a public quotation for a security in an exchange so that when said market maker is required by the exchange to make a market in a security, a BEST market maker quotation is generated. This BEST market maker quotation may be at a price with respect to a public quotation that is closer to the price that minimizes the market maker's exposure to market making activities than to the price of the public quotation. This BEST market maker quotation may also be at a quantity that is closer to the quantity that minimizes the market maker's liability than to the maximum quantity allowed by the exchange.

In accordance with the present invention, a security monitor for market makers which can monitor and automate, when necessary, the market making process is provided. A market mover application is provided to increase the number of securities a market maker can make markets in, thus increasing market maker visibility to customers.

### Brief Description of the Invention

The above-mentioned objects and features of the present invention can be more clearly understood from the following detailed description considered in conjunction with the following drawings, in which the same reference numerals denote the same structural elements throughout, and in which:
FIG. 1 is a chart of a market mover system in accordance with the principles of the present invention;
FIG. 2 is a market maker graphical user interface in accordance with the principles of the present invention;
FIG. 3 is a network topology of a market maker network topology in accordance with the principles of the present invention;
FIG. 4A is a network topology in accordance with the principles of the present invention;
FIG. 4B is a flow chart of the market mover functionality in accordance with the principles of the present invention;
FIG. 5 is a flow chart of the auto-security monitor functionality in accordance with the principles of the present invention;
FIG. 6 is a trading graphical user interface in accordance with the principles of the present invention;
FIGS. 7-9 are market making graphical user interfaces in accordance with the principles of the present invention;
FIG. 10 is a security maintenance graphical user interface in accordance with the principles of the present invention;
FIG. 11 is a group maintenance graphical user interface in accordance with the principles of the present invention;
FIG. 12 is a user maintenance graphical user interface in accordance with the principles of the present invention; and
FIG. 13 is a search graphical user interface in accordance with the principles of the present invention.

### Detailed Description of the Invention

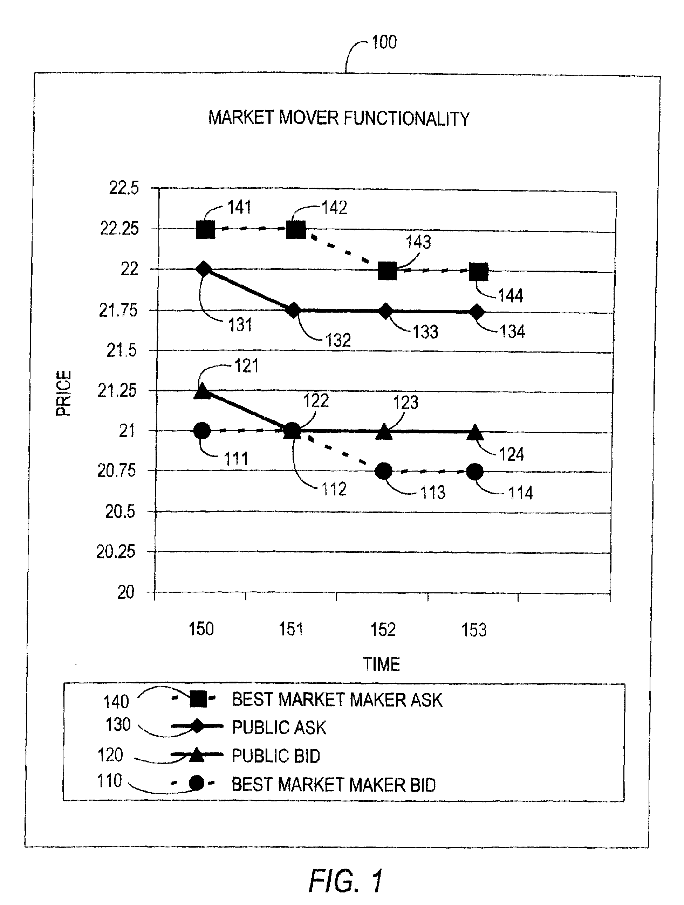

The functionality of the market mover application is illustrated in chart 100 of FIG. 1 and may be employed in an auto-security monitor in accordance with the principles of the present invention. For reference purposes, chart 100 includes both a vertical and horizontal axis. The vertical axes represents particular prices of a security. The horizontal axis represents a particular time during the operation of an exchange. In this manner, a point on chart 100 represents a particular price at a particular time for a security.

Several curves are present in chart 100 and each curve represents a specific set of points associated with a market maker. Particularly, the BEST public bid for a security (e.g., the largest of all BEST market maker bid quotes) is included in chart 100 as public bid curve 120. Similarly, public ask curve 130 is included in chart 100 and represents the BEST public ask for a security (e.g., the smallest of all BEST market maker ask quotes).

Additionally, the BEST bid and ask quotations for the market maker are included in chart 100 as market maker bid curve 110 and market maker ask curve 140. Similar to the BEST two-ended public quotation, the BEST two-ended quotation for a market maker includes that market maker's largest priced bid quote and smallest priced ask quote.

When desired, the market mover system of the present invention preferably moves a market maker's posted quote away from the public inside quote when appropriate. The market mover application may move a market maker's BEST bid away from the public bid by decreasing the market maker's BEST bid price to a desired BEST bid price. The market mover application may move a market maker's BEST ask away from the public ask by increasing the market maker's BEST ask price to a desired BEST ask price.

In some instances, however, it may be desirable to move the market maker's BEST quote closer to the public quote. The market mover application may move a market maker's BEST bid closer to the public bid by increasing the market maker's BEST bid price to a desired BEST bid price. The market mover application may move a market maker's BEST ask closer to the public ask by decreasing the market maker's BEST ask price to a desired BEST ask price. The situations in which it may be desirable to move a market maker's BEST quote away from or closer to the public quote are discussed later in the specification. Persons skilled in the art will appreciate that if regulations limit the situations in which a market maker can preferably move a market maker's quote, the market mover application may be adapted to react to such situations and appropriately change the market maker's quote. Such an adaption is clearly within the scope of the present invention.

In certain situations, it may be desirable to move a market maker's BEST quote away from the public quote for a security. These situations may arise in which a market maker has to make the market in order to fulfill the obligation of being "willing to buy and sell [a] security [from] its own [inventory] on a continuous basis" (e.g, SEC "New Order Handling Rules" IM 4613(a)(1)). One such instance may be, for example, if a market maker has no customer bid orders. Therefore, the market maker has to post a BEST bid to the NASDAQ and, if appropriate, execute that BEST bid. The definition of a "continuous basis" is subject to the interpretation of the SEC and, therefore, is not limited to a rigid constraint. Accordingly, like all SEC defined terms, the market mover application of the present invention is adaptable to the SEC's definition of a "continuous basis".

Preferably, the market mover application may move a market maker's BEST quote away from the public quote by the maximum allowed price change (e.g., the maximum increase in price for an ask quote and the minimum decrease in price for a bid quote) after executing an order at the minimum allowed size. This allows the market maker to make the market while decreasing the probability that the market maker will have to make the market again in the immediate future.

For example, suppose that the maximum allowed change for a market maker's posted BEST bid quote is a customer bid quote at $1.25, yet the next largest customer bid quote for that market maker is $1.00. Also, suppose that the market mover application has found it desirable to move the market maker's quotes of $0.20 at the maximum. Now, if a market maker executes the $1.25 bid order, the market mover application may post a BEST bid for that market maker at $1.05 and at the minimum allowed quantity. In doing so, the market mover application reduces the market mover's exposure to unreasonable changes in the market maker's quotations (e.g., larger then the maximum allowed price change for that exchange).

As per another example, suppose that a the BEST as for the market maker was a limit ask order. In the NASDAQ, a market maker may change an associated BEST ask order if it represents a limit order that has been changed, updated, or cancelled. Therefore, if the BEST limit ask order was removed, the market mover application may then, appropriately, move the market maker's BEST ask quote to a desired price for a desired quantity. Persons skilled in the art will appreciate that the maximum allowed change may also be either a percentage of a quote or any other suitably-defined value.

Persons skilled in the art will also appreciate that other desirable prices and quantities may be utilized by the market mover of the present invention instead of the maximum allowed price change and minimum allowed quantity. For example, the change in BEST quote price may be moved away from the public quote price as a percentage of the average quote movements by the other market makers. Using such a functionality, a market maker will increase the probability that no obligation to make the market will be incurred while posting a reasonable BEST quote. This may be especially useful in exchanges that require a market maker's BEST bid and ask quote to be "reasonable" with respect to the BEST bid and ask quotes of the other market makers. Similar to the SEC term "continuous", the SEC's definition of "reasonable" is based on the interpretation of an SEC committee at the time of question. Therefore, no static definition is available. Applicant's market mover application, however, is fully adaptable to the definition of "reasonable" by the SEC or other regulatory influences.

In other preferred embodiments, the change inhibited by the market mover application may be pre-defined by the market maker at either a set value, defined by an algorithm, or may be a variable value depending on certain criteria and upon meeting certain thresholds. As per another example, the change to the market maker's quote may be the minimal amount of change when a customer order for a relatively large amount of shares occurs, but a maximum amount of change when the market maker is required to make the market.

The functionality of moving a market maker's BEST quote away from a public quote is illustrated in chart 100 through the interaction between market maker bid curve 110 and public bid curve 120. At time 150, market maker bid 111 has a price of $21.00 while public bid 121 has a price of $21.25. Time 151 shows a decrease in public bid 122 to a price of $21.00. As a result, a "hit" between public bid 122 and market maker bid 112 occurs at $21.00.

Simply stated, a "hit" is when the market makers BEST quote is the same as the public quote. With respect to a bid, a "hit" occurs when the market maker's BEST bid is the public bid for a particular security. With respect to an ask, a "hit" occurs when the market maker's BEST ask is the public ask for a particular security. In such a situation the market maker may, if appropriate, be responsible for filling an order at the "hit" price.

The market mover application, if appropriate or desired, may evaluate the size of the most advantageous change based on a present logic or priority that moves market maker bid curve 110 away from public bid curve 120 at a future time, or during a future time interval, such as time 152. For example, the market mover application may move market maker bid 113, at time 152, to a price of $20.75. A desired difference, or gap, between public bid 123 and market maker bid 113 is subsequently realized. At time 153, market maker bid 114 may be the same price as market maker bid 113 at time 152. This may be a result of, for example, the market mover application based on the present logic or priority determining that no change is necessary or that a change is inappropriate.

If the market maker is required to make the market (e.g., no customer or trader order is within the maximum allowed price change for the BEST market maker quotations), the market mover application's price change will be preferably large (e.g, the maximum allowed change for the exchange) and the quantity change will be preferably small (e.g, the minimum allowed size for the exchange). As a result, a market maker employing the market mover application may make markets in a large number of securities (e.g., 3000) when compared to current market makers that make markets in only a few select securities (e.g., 30). Thus, a market maker employing or utilizing methods of the present invention receives the benefits of making markets in multiple securities and minimizes any associated risks (e.g, having to assume large unprotected positions in multiple securities). One such benefit that certain customers will typically bring their orders for a security to a market maker of that security. In maximizing the number of securities a market maker can make markets in, the number of customers executing orders with that market maker will be maximized. Revenue is preferably realized every time an order is executed by the market maker.

The market mover system may provide different functionality for pre-day trading, intra-day trading, and post-day trading intervals. The magnitude of changes employed may be, but are not limited to, a set monetary figure, a percentage of a quote, a function of the "hit" size, the execution of a customer's order, or a function of the trend of a quote with respect to time.

Persons skilled in the art will appreciate that when a customer order is entered that will become part of the market maker's BEST quote, the market mover application may be turned off or may be disabled, either for a preselected time or until it is reenabled. Turning off the market mover application, or going into an idle state, may be accomplished through either manual or autonomous commands. Accordingly, the market mover application may, either manually or autonomously, be reenabled upon the need for the market maker to make the market or for any other desirable or appropriate reason.

As stated, the market mover application also may include the ability to move a market maker's posted quote closer to the public quote for a security if the difference between the two reaches a pre-set or desired value or meets other requirements. In doing so, the market maker may still be perceived as attempting to make the market in a security by increasing the probability that a "hit" will occur.

Another reason why the market mover application may move a market maker's BEST quote closer to the BEST public quote is because the NASDAQ currently has a "Reasonably Competitive Quotation" regulation, IM 4613(D). Here, "a registered market maker in a Nasdaq National Market security will be withdrawn as a registered market maker and precluded from re-registering as a market maker in such issue for 20 business days if its average spread in the security over the course of any full calendar month exceeds 150 percent of the average of all dealer spreads in such issue for the month." In moving a market maker's BEST quote closer to the BEST public quote, the probability that a market maker will conform to a regulation such as the NASDAQ's "Reasonably Competitive Quotation" regulation increases. The price and quantity that the market mover application may move the market maker's BEST quote may be, for example, predetermined or based on a function. If based on a function, the market mover may, for example, move the market maker's BEST quote closer to the BEST public quote to an amount that is within a particular percent of the average of all market maker's BEST quotes.

The functionality of moving a market maker's BEST quote towards a public quote is illustrated in chart 100 through the interaction between market maker ask curve 140 and public ask curve 130. At time 150, market maker ask 141 has a price of $22.25 while public ask 131 has a price of $22.00. Time 151 shows a decrease in public ask 142 to a price of $21.75.

The market mover application, if appropriate or desired, may determine that the difference between market maker ask curve 140 and public ask curve 130 is large and should be decreased for a future time, or during a future time interval, such as time 152. For example, the market mover application may move market maker ask 143, at time 152, to a price of $22.00. A desired difference, or gap, between public ask 133 and market maker ask 143 is subsequently realized. At time 153, market maker ask 144 is at the same price as market maker ask 143 at time 152. This may be a result of, for example, the market mover application determining that no change is necessary or that a change is inappropriate.

Persons skilled in the art will appreciate that it may be desirable to flatten a market maker's position after the market maker makes a market in a security. Simply stated, a market maker will flatten a position to get rid of any excess stock or securities obtained from the trade that the market mover application made in order to make the market. For example, if the market mover application makes a market by buying 100 shares, the market mover application may flatten the market maker's position in that stock by subsequently selling the 100 shares. The functionality of flattening a market maker's position may be easily integrated into the market mover application or any other relevant system of the present invention.

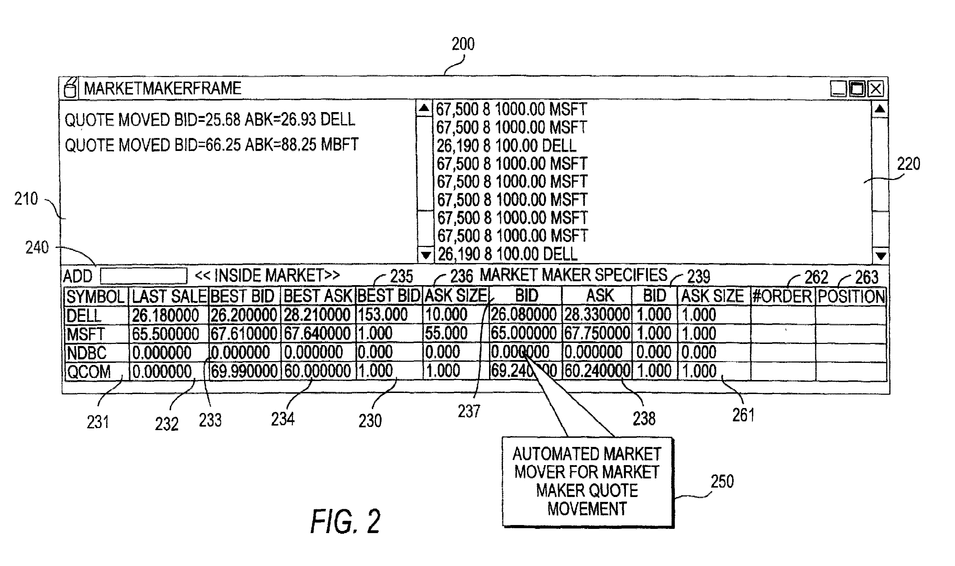

Turning now to FIG. 2, market maker Graphical User Interface (GUI) 200 is illustrated for an auto-security monitor of the present invention and includes the market mover functionality of FIG. 1 as market mover system 250. GUI 200 may include display interactive windows such as simulator panel 210, activity list 220, market watch list 230, and security entry window 240.

Market mover system 250 may be a static system that is directly visible to a user of GUI 200. However, the need to access and change the operation of market mover system 250 may arise. As a result, controls and input windows may be included in GUI 200, or a separate pop-up GUI, in order to make market mover system 250 interactive. In doing so, a user may interactively access the market mover functionality; a technique that may be especially useful during the trading day if, for example, a situation arises where trading strategies involving market moving system 250 need to be addressed and changed.

A market maker can turn the market mover functionality of market mover system 250 OFF and, if desired, operate the quote movement functionality of market mover system 250 manually or semi-manually. Furthermore, a market maker may, if desirable, change the functionality of the market mover application embodied in market mover system 250 by allowing a different application to directly control the market mover functionality. For example, the market maker may set up market mover system 250 so that a customer order application has access to it. In such a situation the customer order application may, if appropriate or desired, turn OFF the market mover functionality of market mover system 250 and move the market maker's best posted quote to a customer quote. After this customer quote (e.g., customer order) has been executed, the customer order application may then turn the market mover functionality of market mover system 250 ON so that the original market moving strategy may return. Such a market moving strategy may, for example, move the market maker's BEST quotes by the maximum reasonable amount for an exchange at an order quantity of, or close to, the minium allowed quantity for the exchange.

Simulator panel 210 preferably displays data from the market mover application to a user of GUI 200. For example, simulator panel 210 may display the time a quote for a security was changed, the amount of change, the type of change, the quote before the change, and the quotes resulting from the change. Also, simulator panel 210 may display data to the user in a variety of ways. For example, data may be displayed through charts, similar to chart 100 of FIG. 1, or graphs to the user of GUI 200.

However, simulator panel 210 is not limited to displaying the data from the market mover application (e.g, market mover system 250). Instead, simulator panel 210 may be configured to include data from other applications or systems. For example, simulator panel 210 may also include data prompting the user that market mover system 250 has been turned OFF or ON by a customer order application or other application. in such a scenario, simulator panel 210 may still display quote movements as a result of customer orders being posted and executed. Accordingly, simulator panel 210 may display data prompting the user that the quote movement was a result of a customer order instead of a movement by market mover system 250.

Activity list 220 preferably displays customer orders of those securities that the market maker, or the user of GUI 200, has elected to monitor. Activity list 220 can also display orders generated from market mover system 250 or quotations from other market makers. List 220 may be scrolled vertically, horizontally, or automatically so that the user of GUI 200 may monitor more orders then can be displayed on GUI 200 at any specific time.

Additionally, an order of list 220 may be selected by the user of GUI 200. When an order is selected, GUI 200 may display directly, or indirectly through a pop-up GUI, data related to this order. For example, selecting an order may display information about the entity placing such as credit status. The orders of list 220 may be organized by, for example, completed, uncompleted, placed orders, approved orders, unapproved orders or any combination thereof.

Watch list 230 of GUI 200 is employed to display information about quotations for the exchange and market maker in addition to any other desired data. Preferably, the displayed data is associated to a security. In order to add securities to watch list 230 a user may enter a security name, or related designation, into entry window 240. Data associated with a security may be, for example, security name 231, last public transaction price 232, public bid 233, public ask 234, public bid size 235, BEST market maker ask size 236, BEST market maker bid 227, market maker bid size 228, market maker bid size 239, market maker ask size 261, order details 262, and additional position information 263. The user may add, remove, select, update, and organize elements of watch list 230 in any desirable way.

Market mover system 250 may also include an initial setup, in which the functionality of market mover system 250 may be configured. Such an initial setup may include, for example, determining what situations may require a manual execution of an order. Manual tasks may be necessary, for example, depending on order size, customer credit status, and customer trade history.

If multiple exchanges or protocols are utilized in specific situations, the functionality of GUI 200 may respectively change. For example, in some situations NASDAQ securities are traded at times outside intra-day operating hours. Such situations include, but are not limited to, pre-market and post-market trading of NASDAQ securities through an independent network known as the Instinet network. Accordingly, it may be preferably for market mover system 250 to operate differently in pre-market trading, or post-market trading, than infra-day trading. For example, a market maker may find it desirable to have a larger change in BEST quotes in a post-market scenario then in an intra-day trading since there may be a higher volatility in prices during post-market trading. Market mover system 250 may then be configured so that quote movements in the market maker's BEST quotes are larger for post-market trading then intra-day trading.

If GUI 200 is configured to follow pre-market trading protocols, the transition to intra-day trading preferably occurs as follows. At 9:15, market mover system 250 sets quotes to the pre-market open quotations. Such quotations can be based on the last Instinet execution for that particular morning or other quotation sources. At 9:30 the market opens, causing intra-day trading to begin. Accordingly, the functionality of market mover system 250 changes so that the NASDAQ is used. For example, market mover system 250 may change its information source from Instinet to the NASDAQ and, as a result, the algorithm of market mover system 250 may change. Similarly, the operation of market mover system 250 may change when intra-day trading is switched to post-market trading.

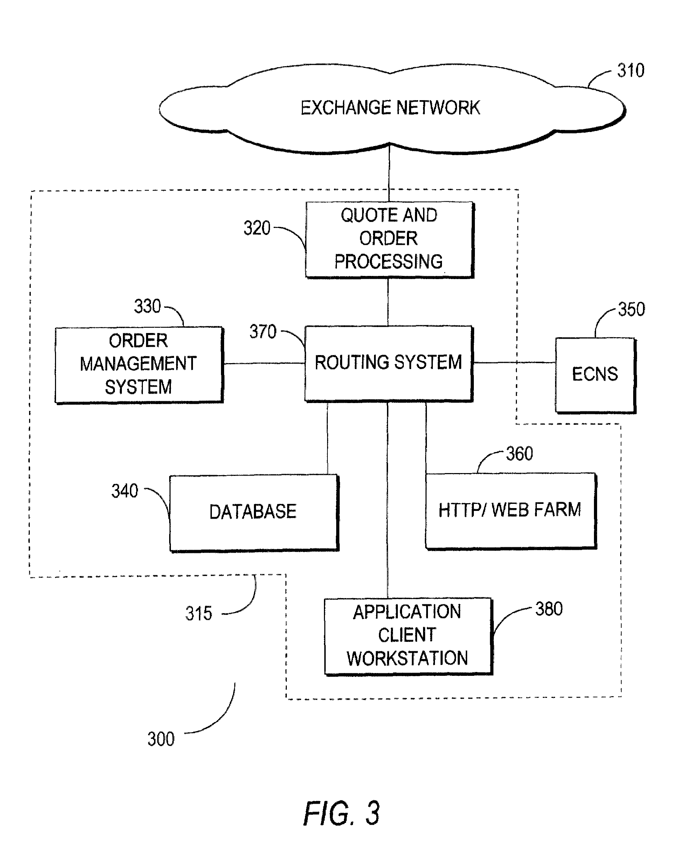

Persons skilled in the art will appreciate that in realizing a market mover application and integrating this system with an interface that allows for manual trading and monitoring of securities, an automated security monitor may be produced in accordance with the methods of the present invention. Accordingly, FIG. 3 illustrates network topology 300, that integrates the auto-security monitor of the present invention. In integrating the auto-security monitor in network topology 300, the auto-security monitor is connected to preferable applications and systems that may be needed for the auto-security monitors to operate as desired.

For example, exchange network 310 is electronically coupled to and preferably in communication with network topology 300. Exchange network 310 may be, for example, the NASDAQ exchange, the Instinet network, or the New York Stock Exchange and may be used by market maker systems 315. By including an exchange network 310, information may be communicated from exchange network 310 to the auto-security monitor and from the auto-security monitor to exchange network 310. Preferably, this information would include, for example, the auto-security monitor communicating the market maker's BEST quotes to the exchange and the exchange communicating the BEST public quotes for that exchange.

Quote and order processing system 320 may be included in network topology 300 in order to facilitate the process of sending and receiving messages with exchange network 310. Such messages may be, for example, order information, order status, order updates, or any other message of a market making system. Quote and order processing system 320 preferably utilizes routing system 370 to communicates with the systems of network topology 300. Routing system 370 may be, for example, a server cluster, computer network, or any other suitable routing device or network.

Order management system 330 may be included in network topology 300 and may also utilize routing system 370 as a communications tool. Order management system 330 provides network topology 300 with the functionality of order and position analysis, organization, and management. Order management system 330 may, along with the other systems of network topology 300, store and retrieve information with database 340. Data sent and retrieved from ECNs is communicated through one or more ECN 350 connections. In doing so, the systems of network topology 300 may communicate share information with other market makers. Persons skilled in the art will appreciate that ECN 350 connections, and even the ECNs themselves, may also be included in market maker systems 315.

One or more application client workstations 380 are included in network topology 300 and may be included or connected directly to web farm 360 or any other system of network topology 300. Furthermore, information may be sent and received through web farm 360 by an internet, intranet, or related communications system. Application client workstations 380 contain and process a majority of the customized applications and functions of the present invention. Particularly, application client workstations 380 may include a memory that stores a program that is operable to implement the auto-security monitor and market mover application of the present invention.

Application clients workstation 380 may communicate with customers through, for example, web farm 360. Application client workstations 380 also include systems from which a market maker may interact with and control the applications and systems in network topology 300 or any relevant systems located outside network topology 300.

Application client workstations 380 may be personal computers, laptop computers, mainframe computers, dumb terminals, data displays, Internet browsers, Personal Digital Assistants (PDAs), two-way pagers, wireless terminals, portable telephones, etc., or any combination of the same. Application client workstations 380 may be used by the market maker, traders, or administrators in order to enter into and proceed with the activities that relate to the present invention.

A server may be included in or embodied by application client workstation 380 (not shown in FIG. 3) or any other system of network topology 300. Such a server may include a processor, display device (e.g., monitor), input device (e.g., keyboard), and memory. The components of this server may be interconnected. The storage device may contain any data needed or created by the systems of the present invention. The server may also contain a server program for controlling the processor.

Persons skilled in the art will appreciate that if application client workstation 380 is realized by a server, the processor may employ the functionality of the market mover application or auto-security monitor of the present invention. For example, if the processor is used by the market mover application, the processor may be used to generate the BEST bid and ask quotations for the market maker.

Persons skilled in the art will appreciate that network topology 300 may be implemented in network configurations not represented in FIG. 3. For example, network topology 300 may be configured to operate simultaneously on a variety of exchanges. Additionally, if network topology 300 operates under different protocols the configuration of network topology 300 may also accordingly change with these protocols. For example, during pre-market trading in the NASDAQ, the auto-security monitor may need to communicate with the Instinet network. However, during intra-day trading in the NASDAQ, the auto-security monitor may need to communicate with the NASDAQ exchange. Therefore, the present invention can be embodied in different configurations other than the one shown in FIG. 3, either through software implementations or direct manual network changes, when desired or appropriate.

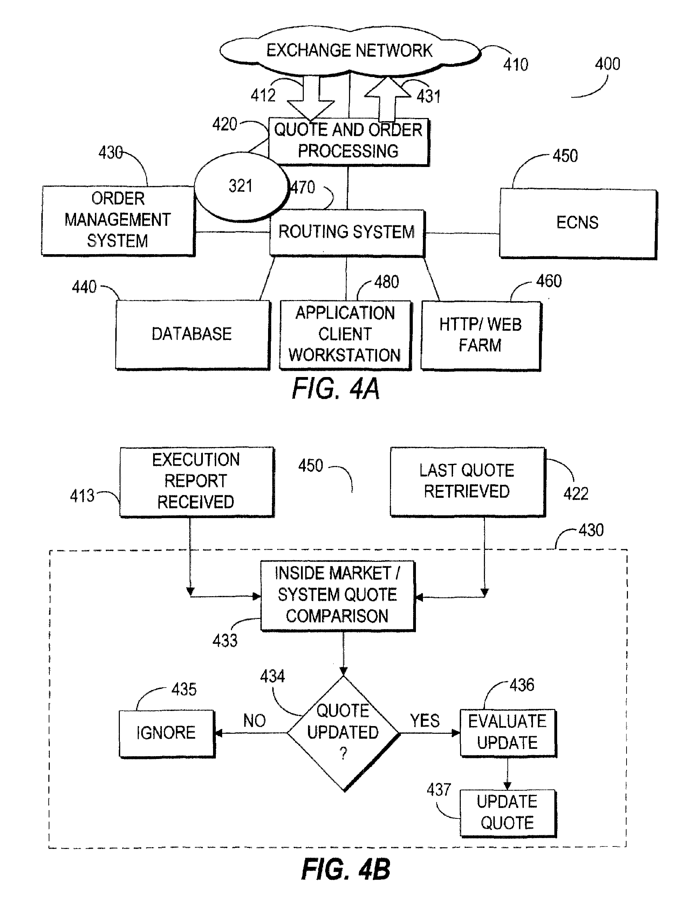

The interaction between some of the systems of network topology 300 of FIG. 3 is illustrated in FIGS. 4A and 4B. FIGS. 4A and 4B include network topology 400 and flow chart 450, respectively. Network topology 400 is identical to network topology 300 of FIG. 3 except network topology 400 includes process flow designations that are associated with flow chart 450 of FIG. 4B. Since the structure of network topology 400 is identical to network topology 300 of FIG. 3, the same references numerals have been used throughout.

Network topology 400 includes communication 412, which is denoted as process step 413 in flow chart 450 of FIG. 4B. Here, the auto-security monitor of the present invention receives an execution report from the exchange. This execution report reflects the market maker's last trade. Simultaneously, the auto-security monitor retrieves the last public quote from the public quote source.

Next, as depicted in communications network 421 of network topology 400 and communication 431 and process group 430 of flow chart 450, the auto-security monitor compares the public market quote to the market maker's quote, sending a request to update the market maker's quote if necessary. Specifically, flow chart function 433 compares the public market quotes with the market maker's quotes. Flow chart function 434 decides if a quote update or change is necessary. If an update or change is necessary, flow chart function 436 evaluates the type and magnitude of the desired change. If no change is desired, flow chart function 430 preferably stops at step 435. Otherwise, a change may be desired and, in flow chart function 437, an appropriate change is made to the market maker's BEST quotes.

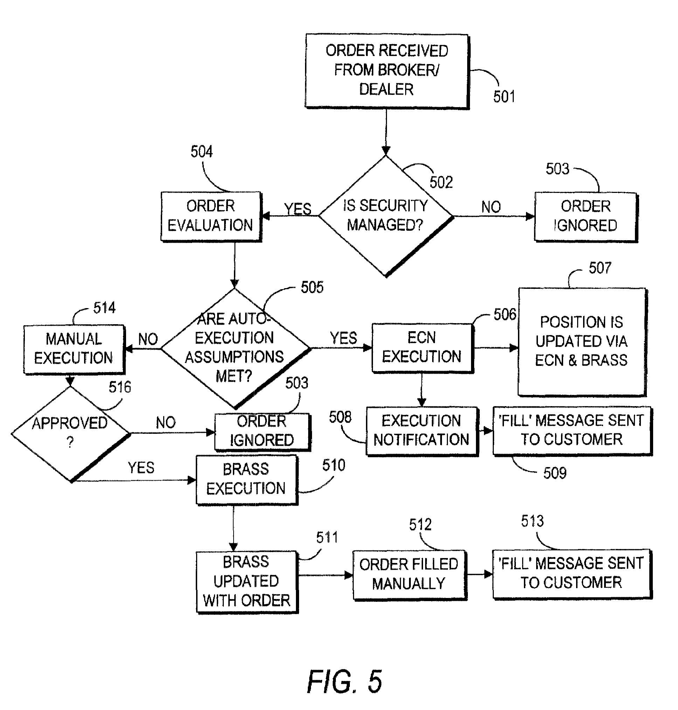

Turning now to FIG. 5, flow chart 500 is illustrated that includes the process steps for the realization of the order inception, order execution, and order fulfillment functions of the auto-security monitor in accordance with the principles of the present invention.

Entry step 501 initiates at the receipt of an order request from a broker, dealer, or a "hit" from the market mover application of the present invention. Order requests can be sent to through, for example, SelectNet or SOES messaging systems. Also, the order request may be entered into the system manually from, for example, a customer service representative that is handling a customer order. Next, the order is checked to see if the security is managed by the market maker in step 502. Additionally, step 502 may check to see if other pre-determined criteria, such as order size, customer credit status, are met.

If the order criteria are not met (e.g., if the security is not managed) then step 503 presides and the order may be ignored or redirected to the appropriate system. Optionally, according to the present invention, the order may be flagged and presented to a trader for manual attention and, if necessary, manual order execution. Such an order may also be automatically forwarded to a market maker for the requested security.

One alternative embodiment of a method or system according to the invention may be a step that contacts either the customer, market maker, or both with information associated with why the order was cancelled. Such a step (not shown in FIG. 5) may allow the order to be corrected by the customer if the customer realized an error in the order.

If the order criteria are met, then the order is forwarded to step 504 and the order is evaluated. Functionality associated with order evaluation may be, for example, a margin hold operation on a customer's account for a margin order or a credit hold operation on a customer's account for the cost of the order if executed.

Step 505 may be included so that any automated execution requirements are met. For example, a requirement of step 505 may be that the order be a multiple of 100 shared. Therefore, if an order reaches step 505 for 150 shares, this requirement is not met and a manual execution for this order may be preferred. Step 505 may also utilize, if desired or appropriate, portions of the market mover application of the present invention to determine if an order is appropriate for an automatic execution. If the requirements of step 505 are met, the process continues to step 506.

Persons skilled in the art will appreciate that not all of the requirements necessarily have to be met in step 505 for the order to reach step 506. For example, step 505 may be configured so that only a percentage of the defined requirements have to be met. Accordingly, in a percentage-based analysis, the requirements could be weighted differently. If the automated order requirements are not met as required by the market maker, then step 510 presides, signifying a manual semi-manual trade execution.

When step 506 is reached, the automated order execution process begins and the order is sent to the ECN. Subsequently, the ECN updates the market maker's position in BRASS in step 507. The ECN will notify the auto-security monitor of the execution in step 508. Next, an order filled message may be sent to the customer by the auto-security monitor in step 509. Such an order filled message may include, for example, time executed, associated fees, type of order, order amount, price of order, and other details of the order or order fulfillment.

If the requirements are not met for automated order execution in step 505, step 514 is reached. Here, a manual order execution process is initiated. If the order is manually approved for automated execution, step 510 is reached. If the order is not manually approved, step 516 is reached and the order is either ignored or the appropriate steps are taken manually to terminate, redirect, or fix the order. Such steps may include, for example, a user calling the customer requesting instructions that would allow the order to be executed manually.

In step 510, the auto-security monitor sends the order to BRASS, or the equivalent, for execution. BRASS is first updated with the customer order in step 511, resulting in the market maker manually filling the order in step 512. Finally, step 513 is reached, in which BRASS sends an order filled message to the customer.

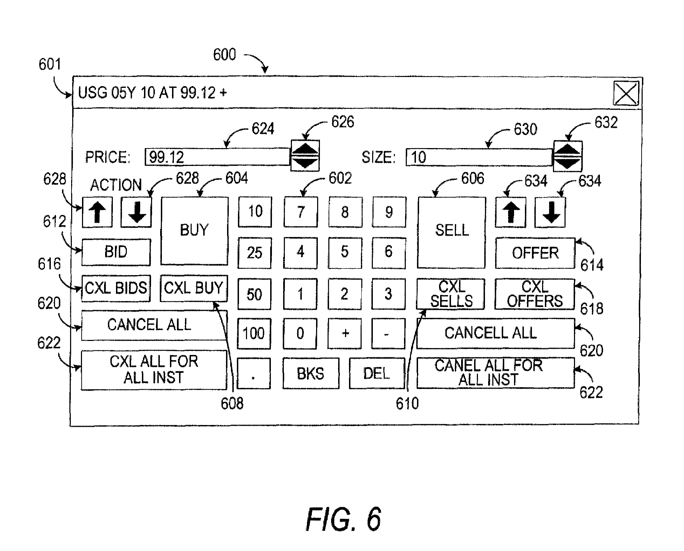

Turning to FIG. 6, trade GUI 600 is illustrated that may be used to manually submit and respond to and execute bids and asks presented in an exchange for a security. Trade GUI 600 is described in co-pending, commonly-assigned patent application 09/745,651 filed on December 22, 1999, which is hereby incorporated by reference herein in its entirety. Trade GUI 600 is also described in commonly assigned provisional application 60/295,300, filed on June 1, 2001, which is hereby incorporated by reference herein in its entirety. When presented, GUI 600 may indicate information about the bid and ask selected by the market maker in a display 601. As shown, for example, upon the trader selecting a security in market watch list 430 from FIG. 4, GUI 600 may be presented with the instrument "usg 05Y" indicated in display 601. Display 601 may also indicate the current bid price for the instrument (i.e., "99.12+") and the current bid size for the instrument (i.e., "10").

As also shown in FIG. 6, a variety of buttons and entry fields may be incorporated into trade GUI 600. At the center of trade GUI 600, a numeric keypad 602 is displayed. As illustrated, numeric keypad 602 provides buttons for numbers zero through nine, ten, twenty-five, fifty, and one hundred. Numeric keypad 602 also contains a plus button ("+"), a minus button ("-"), a decimal point button ("."), a backspace button ("BKS"), and a delete button ("DEL"). Trade GUI 600 also provides a buy button 604, a sell button 606, a cancel buy button 608, a cancel sells button 610, a bid button 612, an ask button 614, a cancel bids button 616, a cancel asks button 618, cancel all buttons 620, cancel all for all instruments buttons 622, a price entry field 624, price up and down buttons 626, bid price up and down buttons 628, ask price up and down buttons 634, a size entry field 630, and size up and down buttons 632.

In order to submit a bid or ask for the instrument indicated in display 601 using trade GUI 600, a trader may first set a bid or ask price and a bid or ask size by entering the appropriate values in fields 624 and 630, respectively, using up and down buttons 626, 628, 632, and/or 634 and/or using keypad 602. Once the desired price and size for the bid or ask have been specified, the trader may then submit the bid or ask by pressing bid button 604 or the ask button 614.

In order to hit a bid or lift (or take) an ask for the instrument indicated in display 601 using trade GUI 600, a trader may first specify a size in field 630 using up and down buttons 632 and/or 634 and/or using keypad 602. Once the desired size has been specified, the trader may then hit the bid or lift (or take) the ask for the specified size by pressing sell button 606 or buy button 604, respectively.

In the event that a trader desires to cancel a bid, an ask, a hit, or a lift (or take), the trader may press any corresponding one of buttons 608, 610, 616, 618, 620, and 622. Trade GUI 600 may be used as a manual trade GUI for GUI 200 of FIG. 2.

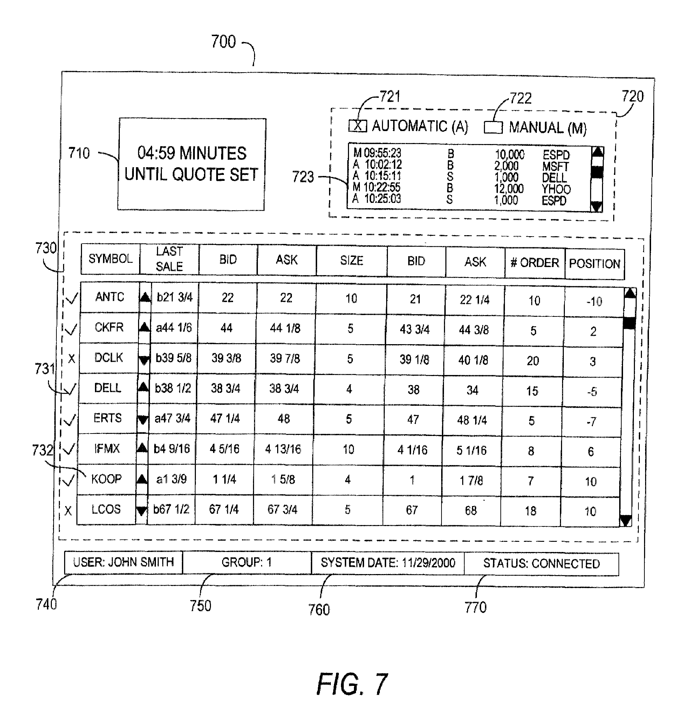

Turning now to FIG. 7, market making GUI 700 is illustrated. GUI 700 is based on market mover GUI 200 of FIG. 2 and, similarly, can be used in conjunction with trade GUI 600 to carry out the methods of the auto-security monitor of the present invention. Such functionality may be, for example, the functionality in flow chart 100 of FIG. 1.

GUI 700 may include data window 710 that depicts, for example, the time left until quotations for an exchange set for intra-day trading. Additionally, data window 710 may display the same information as the simulator panel 210 of FIG. 2.

GUI 700 may include the ability to look at manual and automatic orders for a plurality of securities in a plurality of exchanges as defined by the user through order watch window 720. Order watch window 720 may include automatic and manual trading check-boxes 721 and 722. When active, these check-boxes may determine the type of orders displayed in order list 723. Order watch window 720 may also display the same information as activity list 220 of FIG. 2.

Additionally, GUI 700 may include security watch window 730 that is similar to market watch list 230 of FIG. 2. As a result, the information depicted in security watch window 730 may include a security's symbol, price trend, last sale quote, BEST market maker bid quotes, BEST public bid quotes, BEST market maker ask quotes, BEST public ask quotes, order quantities, or any other desired information. Additionally, security symbols may be included on GUI 700 that are selectable. Such symbols may preferably be configured to bring up manual trading GUI 600 or information related to the security when selected.

Status symbol 731 may be included in GUI 700 and may reflect whether a specific security is enabled for either trading, real-time monitoring, or implementation of the market moving application. Enabling a security may allow functions of the present invention to become operational. Therefore, enabling a security may turn on the market mover functionality for that security according to the present invention as well as give manual trade access to the user of GUI 700.

User panel 740 may be present on GUI 700 and may display data about the user of GUI 700. Such data may be, for example, the user's name, identification number, login name, and security level. Similarly, group panel 750 may be included in GUI 700, and display information associated with a group that the user is associated with. Such data may be, for example, the user's group number, group name, and group security level. Also included in GUI 700 may be system panel 760 that may display data such as the current date, current time, last used date, last used time, last revision date, and current version information.

In order to display if the functionality of GUI 700 is operational, status information 770 may be included. Status information 770 may preferably display the status of GUI 700 being ON or OFF. Similarly, status information may display the status of a network connection or functionality of the market mover application of the present invention.

Persons skilled in the art will appreciate that additional data columns may be included into GUI 700. For example, data columns may be included to indicate the exchange for each security or execution destination for each order. Such additional data columns may also be included in any other GUI of the present invention such as GUI 200 of FIG. 2.

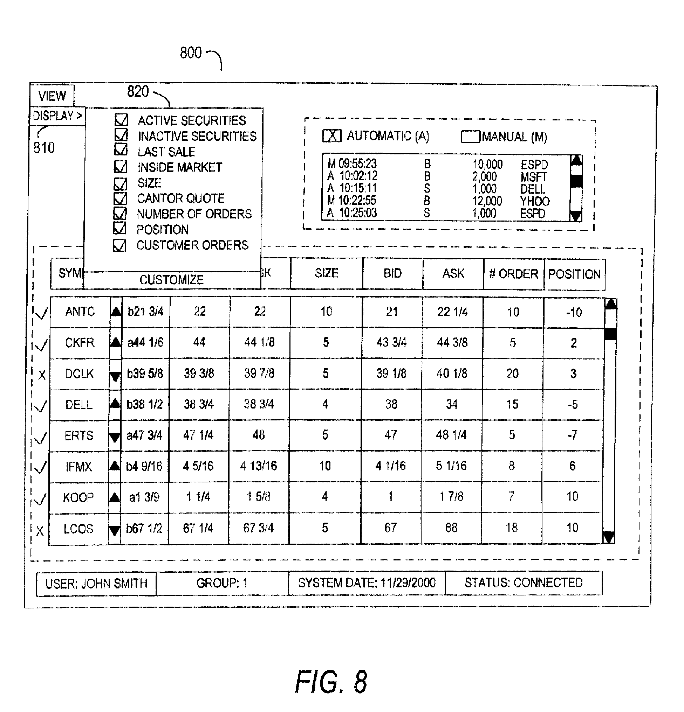

FIG. 8 is an illustration of market making GUI 800 that includes toolbar 810. Possible options in toolbar 810 may include pull-down view bar 820, file options, editing options, insert options, format options, tool options, window options, and help options.

Pull-down view bar 820 may include a customizable list of viewing options for GUI 800. Options selectable in view bar 820 may include, for example, active securities, inactive securities, last sale, inside market, size, market maker quote, number of orders, position, and customer orders. By selecting view options through view bar 820, GUI 800 will accordingly display the selected options. Additionally, a user may customize view bar 820 through customize option 821. Here, a user may, if desirable, create and modify selectable data options for display by view bar 820.

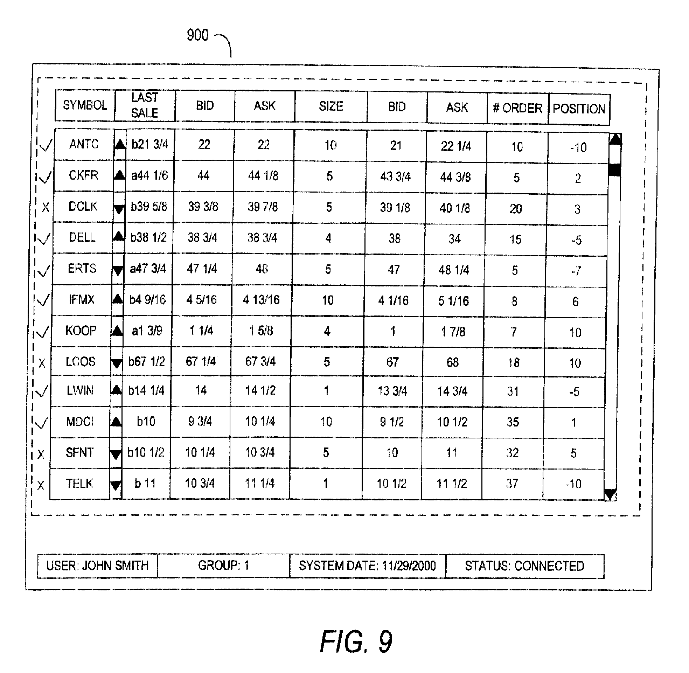

Turning now to FIG. 9, GUI 900 illustrates the level of customization that may be gained from customize option 821 and display bar 820 of FIG. 8. Here, all windows have been eliminated in GUI 900 except for those displaying system critical information 920 and security information 910. As a result of this customization, a greater number of securities are displayed on GUI 900 when compared to GUI 800 of FIG. 8. Therefore, a user of GUI 900 may increase his or her productivity by managing more securities, subsequently increasing revenue for the market maker. Persons skilled in the art will appreciate that even more securities may be displayed on GUI 900 by removing system critical information 920. Removing this information would only require the user of GUI 900 to deselect it through view bar 820 of FIG. 8 (not shown in FIG. 9).

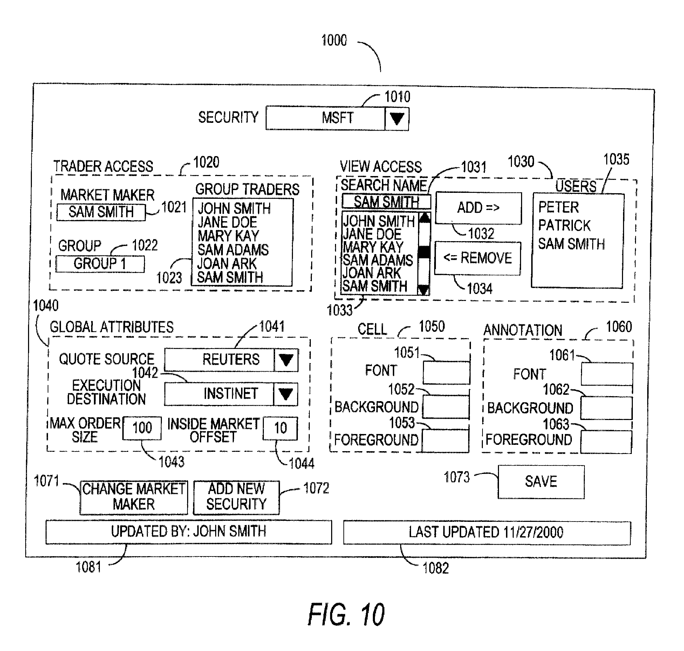

Security GUI 1000 is illustrated in FIG. 10 and employs a variety of the security features of the auto-security monitor of the present invention. Security GUI 1000 may include security menu 1010, trader access window 1020, view access window 1030, global attribute window 1040, cell attribute window 1050, annotation attribute window 1060, change user button 1071, add security button 1072, save button 1073, updated by panel 1081, and last updated panel 108B.

Security menu 1010 may take the form of a pull down menu, text box, or data window. Information contained in security menu 1010 may be, for example, a list of all the securities managed by the market maker or present on an exchange. In this manner, securities are preferably selected so that a user may change and save security options associated with a selected security. For example, if the user wanted to update the traders that can make markets for the market maker in the public stock Microsoft, the user may enter the stock's symbol 'MSFT' into security menu 1010.

Trader access window 1020 in FIG. 10 may contain market maker panel 1021, group panel 1022, and group traders window 1023. These displays are related to the security selected in menu 1010 and changeable upon a user's interaction. For example, if 'MSFT' was entered into the security menu 1010 then the trading group assigned to 'MSFT' may be displayed in group panel 1022. The traders that make up the group displayed in group panel 1022 may be displayed in group traders window 1023. Similarly, the trader in charge of the group displayed in group panel 1022 may be displayed in market maker panel 1021. A user may change the information in displays 1021-1023 and, if appropriate or desired, save the information. Saved information may be saved in, for example, database 340 of FIG. 3.

View access window 1030 in FIG. 10 may contain search name field 1031, search list 1032, add button 1033, remove button 1034, and user list 1035. A user may search a list of personnel by entering data into search name field 1031 or scrolling and selecting data from search list 1032. Once a name is chosen, the user can add this name to user list 1035 via add button 1033. User list 1035 may be configured to give administration rights any person in user list 1035. Administration rights may include, for example, the ability to view, change, and save information in security GUI 1000 for a specific security. Data selected from user list 1035 may also be removed via remove button 1034.

Global attribute window 1040 may also be included in GUI 1000 to provide security trading restrictions and options for the security selected in security menu 1010. For example, a user may select the service providing information for the selected security from multiple services through quote source menu 1041. Additionally, the user may select the service providing order execution for the selected security from multiple services through execution destination menu 1042. An order size restriction may be controlled through max size field 1043. Such a restriction may limit the number of shares allowed in an order, an automated order, and a manual order. Additionally, an offset restriction may be controlled through an offset field 1044. Such a restriction may be configured to control movement changes in the market mover functionality of FIG. 2 for the selected security.

Persons skilled in the art will also appreciate that global attribute window 1040 may include additional global attributes not shown in FIG. 10. For example, a menu may be included in FIG. 10 that allows a user to select an execution destination from multiple execution destinations.

Cell attribute window 1050 in FIG. 10 may be preferably used, for example, to change the font, background, and foreground of the cells through respective font field 1051, background field 1052, and foreground field 1053. Annotation attribute window 106 in FIG. 10 may be preferably used, for example, to change the font, background, and foreground of the annotations through respective font field 1061, background field 1052, and foreground field 1063.

If a user wanted to change the head market maker for a given security, change market maker button 1071 may be used. If a situation arises where it is desirable to add a new security, the user may use button 1072 to do so. Additionally, any changes that are made by the user may be saved through save button 1073. A panel 1081 may exist to show data on which user performed the last save operation or version upgrade. A panel 1082 may exist to show data on when the last save operation or version upgrade occurred.

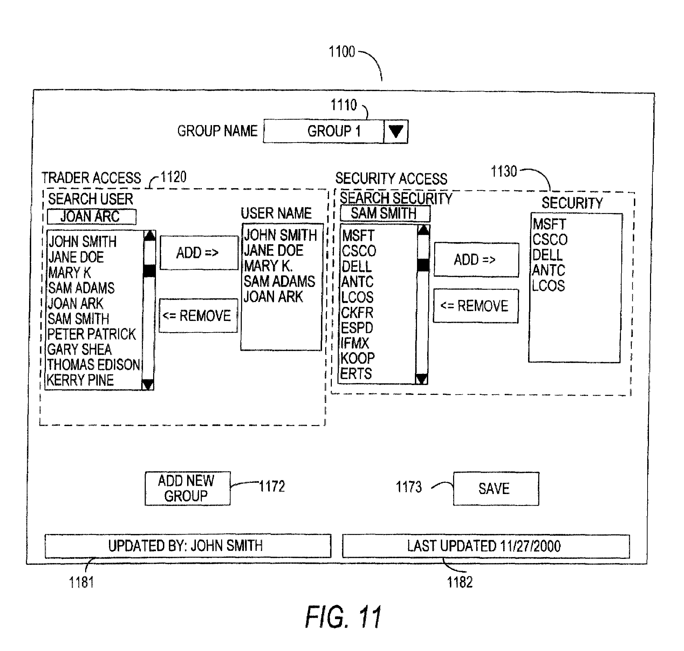

FIG. 11 is a group maintenance GUI 1100 embodying principles of the present invention. Group maintenance GUI 1100 may be used to monitor, change, and save security and trade access for the auto-security monitor of the present invention. GUI 1100 may include, for example, group field 1110, trader access window 1120, security access window 1130, add button 1172, save button 1173, updated by panel 1181, and last updated panel 1182.

A user may select or enter a group in group field 1110 in order to view and change the information associated with that group. A user may search and subsequently change trader access and security access for this group through trader access window 1110 and security access window 1120. Both of these windows operate under the same principles as view access window 1030 of FIG. 10. If a new group needs to be added to the system then the user may use add button 1172. Furthermore, if the data on GUI 1100 was changed and the user desires these changes to be saved, the user may use save button 1173 to do so.

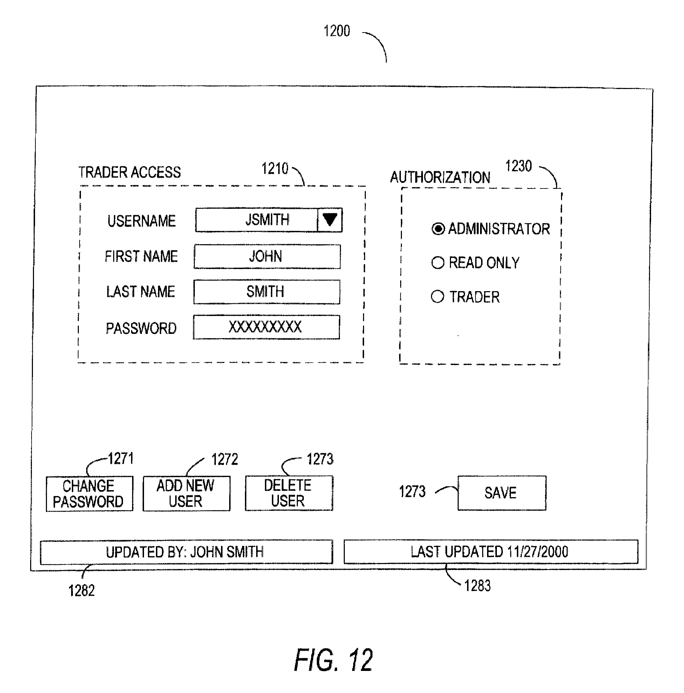

FIG. 12 illustrates user maintenance GUI 1200. GUI 1200 may be used to set authorization levels and login/password information for users of the auto-security monitor of the present invention. Additionally, user maintenance 1200 may include login properties window 1210, authorization window 1220, change button 1271, add button 1272, delete button 1274, save button 1273, updated by panel 1281, and last updated panel 1282.

Login properties window 1210 may be used to change the properties of a user and may include name menu 1211, first field 1212, last field 1213, and password field 1214. Using this window, a user may.select or enter a user name in name menu 1211. The user may then view and edit the selection's first name, last name and password through the first field 1212, last field 1213, and password field 1214. The password may also be changed through the change button 1271. Furthermore, a user may be added or deleted through add button 1272 and delete button 1274 respectively. Authorization window 1220 may exist so that access rights can be associated to the user. Such access rights might include those of administrator, trader, or viewer. If changes were made to the data on user maintenance window 1200 the changes may be saved through save button 1273.

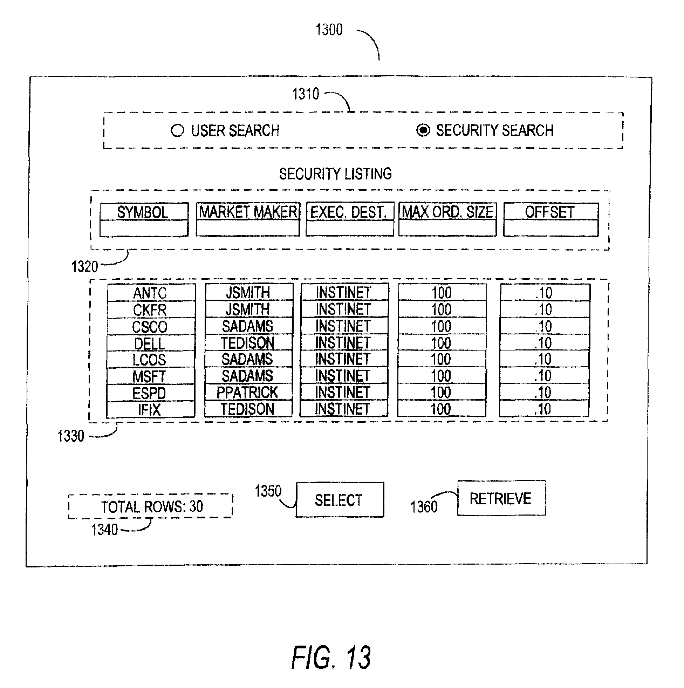

FIG. 13 illustrates search GUI 1300 embodying principles of the present invention. Search GUI 1300 may be used to search data in the auto-security monitor of the present invention. Two types of searches that may be implemented are a user search and a security search. Search GUI 1300 includes search panel 1310, in which the user can change the type of search desired. Input window 1320 may be included and allow the user to enter search criteria and the results of the search may be displayed in a result window 1330.

If a security search is chosen, the input window 1300 may contain areas where search criteria such as a securities symbol, market maker, execution destination, max order size, and offset may be entered. If a user search is chosen, input window 1300 may contain areas where search criteria such as a users username, first name, last name, and authorization. The results of a search would be depicted in result window 1330 where instances of data where all or part of the search criteria was met. In order to increase the usefulness of search GUI 1300, result label 1340 may be present to show the amount of matches that occur in a search. Additionally, select button 1350 and retrieve button 1360 may be implemented to respectively select the search data and start a search.

A person of ordinary skill in the art also will appreciate that the present invention is not limited to the embodiments described above that implement a plurality of GUIs and process modules to create an auto-security monitor. Instead, the present invention more generally involves the methods of receiving an order, balancing an order, managing market maker quotes, evaluating these quotes with respect to inside quotes, moving a market maker's BEST quotes through a market moving functionality, and carrying out an order if necessary either manually or automatically as predetermined by the market maker. The principles of the present invention may be used in any exchange, even those that do not use market makers to make markets. Additionally, persons skilled in the art will appreciate that the market maker application can simultaneously reference, generate and post, prices from multiple exchanges. The market mover application can also be used to make markets in any product traded on a rules based exchange. For example, the market mover application may be used on any debt, equity, commodity, futures, or option exchange.

Personals skilled in the art will recognize that the system of the present invention may be implemented using attributes other than those shown or discussed. The present invention may be realized not only automatically, semiautomatically, and manually, but in a multiple state automatic process. For example, instead of the present invention evaluating if the order should be executed manually or automatically, the addition of other options may be present such as automatic execution through a secondary means. Additionally, the order of the present invention could be split by the auto-security monitor so that at least a portion of the order is executed automatically and instantly. All such modifications are within the scope of the present invention, which is limited only by the claims that follow.

## Claims

1. A method for monitoring and making markets in securities for an exchange, the method that reduces a market maker's exposure to market making activities, the method comprising:
monitoring the activity of a public quotation for a security in said exchange; and
when said market maker is required by said exchange to make a market in said security, generating a BEST market maker quotation, said generating comprising generating the BEST market maker quotation at a price with respect to said public quotation that is closer to the price that minimizes said market maker's exposure to market making activities than to the price of said public quotation, and at a generated quantity that is closer to the quantity that minimizes the market maker's liability than to the maximum quantity allowed by said exchange.

2. The method of claim 1, wherein said generated BEST market maker quotation is at the maximum allowed price change of a quotation movement by said exchange.

3. The method of claim 1, wherein said generated BEST market maker quotation is equal to the smallest quantity allowed by said exchange.

4. The method of claim 1, wherein said generated BEST market maker quotation at a pre-determined ratio to said public quote.

5. The method of claim 1, wherein said generated BEST market maker quotation is at the maximum allowed amount of change by said exchange.

6. The method of claim 1, wherein said generated BEST market maker quotation is generated based on an algorithm.

7. The method of claim 1, wherein said public quotation and said generated BEST market maker quotation is a bid quotation.

8. The method of claim 1, wherein said public quotation and said generated BEST market maker quotation is an ask quotation.

9. The method of claim 1, further comprising moving said BEST market maker quotation closer to said public quotation when the difference between said BEST market maker quotation and said public quotation is greater than the maximum allowed price change allowed by said exchange.

10. The method of claim 1, further comprising moving said BEST market maker quotation closer to said public quotation when the difference between said BEST market maker quotation and said public quotation is greater than a percentage of said public quotation.

11. The method of claim 1, wherein said market mover application moves said BEST market maker quotation closer to said public quotation when the difference between said BEST market maker quotation and said public quotation is greater than a percentage of the maximum allowed amount of change by said exchange.

12. The method of claim 1, wherein said market mover application moves said generated BEST market maker quotation closer to said public quotation when the difference between said BEST market maker quotation and said public quotation is greater than is a fixed amount.

13. The method of claim 1, wherein said market mover application moves said generated BEST market maker quotation closer to said public quotation when the difference between said BEST market maker quotation and said public quotation is greater than is a fixed value based on an algorithm.

14. Apparatus for monitoring and making markets in securities for an exchange, thereby to reduce a market maker's exposure to market making activities, comprising:
means for monitoring the activity of a public quotation for a security in said exchange;
means arranged, in response to a requirement by said exchange to make a market in said security, to generate a BEST market maker quotation, wherein said quotation generating means is arranged to generate the BEST market maker quotation at a price with respect to said public quotation that is closer to the price that minimises said market maker's exposure to market making activities than to the price of said public quotation, and at a generated quantity that is closer to the quantity that minimises the market maker's liability than to the maximum quantity allowed by said exchange.

15. An electronic trading system for use by a market maker, the system comprising:
a user network; and
a data network arranged to provide communication between a securities exchange network and the user network;
wherein the user network comprises:
means for processing data representing securities to be traded on said exchange network;
means for managing said data;
at least one client workstation; and
means for communicating between the user network client workstations(s) and respective remote user workstation(s);
said user network being arranged to monitor signals representative of the activity of a public quotation for a security in said securities exchange, to receive a signal representing a requirement to make a market in said security, and, in response to said received signal, to carry out comparisons between stored and/or received data to generate resultant data representing the BEST market maker quotation at a price with respect to said public quotation that is closer to the price that minimises said market maker's exposure to market making activities than to the price of said public quotation, and at a generated quantity that is closer to the quantity that minimises the market maker's liability than to the maximum quantity allowed by said exchange.
